# EUROPÄISCHE PATENTSCHRIFT

(11) **EP 1 734 321 B1**
(45) Veröffentlichungstag und Bekanntmachung des Hinweises auf die Patenterteilung: **09.01.2008**
(21) Anmeldenummer: 06012383.3
(22) Anmeldetag: 16.06.2006
(51) Int. Cl.: F27B 1/00, F27B 1/08, F27B 3/22, C21B 11/02, C21B 13/02, C21C 5/56, C22B 7/00, F27D 13/00

(54) **Verfahren und Schachtofen zum Erhitzen und Niederschmelzen von Reststoffen wie beispielsweise Schrott**
Process and shaft furnace for heating and melting down waste materials such as shredded scrap
Procédé et four à cuve pour le réchauffement et la fusion de déchets comme en particulier des mitrailles

(30) Priorität: 17.06.2005 DE 102005028158
(43) Veröffentlichungstag der Anmeldung: 20.12.2006
(73) Patentinhaber: SMS Demag Aktiengesellschaft, 40237 Düsseldorf (DE)
(72) Erfinder: Meyn, Matthias, 40721 Hilden (DE)
(74) Vertreter: Klüppel, Walter

(56) Entgegenhaltungen:
- WO-A-03/068995
- DE-A1- 2 427 360
- US-A- 2 161 180
- US-A- 3 894 864
- DATABASE WPI Week 197645 Derwent Publications Ltd., London, GB; AN 1976-84596X XP002400998 & SU 503 106 A (SUMSK TSENTROLIT) 20. April 1976 (1976-04-20)
- DATABASE WPI Week 199236 Derwent Publications Ltd., London, GB; AN 1992-298528 XP002400999 & SU 1 694 654 A1 (FERROUS METALLURGY INST) 30. November 1991 (1991-11-30)
- DATABASE WPI Week 198325 Derwent Publications Ltd., London, GB; AN 1983-60993K XP002401000 & SU 949 323 B (PENZA POLY) 9. August 1982 (1982-08-09)
- PATENT ABSTRACTS OF JAPAN Bd. 008, Nr. 279 (C-257), 20. Dezember 1984 (1984-12-20) & JP 59 150005 A (DAIDO TOKUSHUKO KK), 28. August 1984 (1984-08-28)

## Beschreibung

Die Erfindung betrifft ein Verfahren zur kontinuierlichen thermischen Behandlung von Reststoffen wie beispielsweise Schrott durch Einschmelzen in einem im Gegenstrom betriebenen, durch Brenner mit Primärbrennstoffen direkt beheizten feuerfest ausgekleideten Schachtofen für Hochtemperaturprozesse (sogenannter Primärenergieschmelzer), wobei die am oberen Ende des Schachtofens zugeführten Reststoffe langsam nach unten sinken und dabei durch entgegengesetzt aufsteigende heiße Verbrennungsgase von im Schmelzschacht stattfindenden Verbrennungsreaktionen stetig bis auf Schmelztemperatur aufgeheizt und am unteren Schachtende als Schmelze abgezogen werden.

Schachtöfen für die kontinuierliche Herstellung von Roheisen oder Stahl aus unterschiedlichen Einsatzstoffen wie beispielsweise Erz, Eisenschwammpellets oder Sinter haben sich in der Vergangenheit bewährt, wobei für das reine Einschmelzen zumeist elektrische Energie in Form eines Lichtbogens verwendet wird. Es war deshalb naheliegend, derartige Schachtöfen auch für das Einschmelzen von Reststoffen wie beispielsweise Schrott zu verwenden.

Beim Einschmelzen von Schrott soll im unteren Teil des Schachtes das Einsatzmaterial nur auf etwas oberhalb der Schmelztemperatur aufgeheizt werden, damit die Feststoffsäule nicht haltlos in die Schmelze einsinkt, und nach dem Aufschmelzen dann kontinuierlich aus dem Schmelzgefäß abfließen. Damit das schmelzflüssige Material jedoch kontinuierlich abfließen kann, darf das noch nicht geschmolzene feste Material nicht großflächig in der Schmelze stehen. Insbesondere kommt es dann in den kälteren Bereichen des Schachtbodens zum Wiedererstarren von bereits geschmolzenem Material.

Ein Schachtofen, der zum Einschmelzen von Schrott einen Lichtbogen verwendet, ist aus der WO 94/10348 A1 bekannt. Hierbei wird vorgeschlagen, die aus dem Schrott gebildete Schrottsäule in Form einer Hülse auszubilden und dabei den Schrott in einem ebenen Querschnitt senkrecht im Schacht absinken zu lassen. Vor Erreichen der Schmelzzone wird der freie innere Raum der aus Schrott gebildeten Hülse verkleinert und einem brennenden Lichtbogen ausgesetzt. Die den Lichtbogen erzeugende Elektrode ist dabei in einem Rohr untergebracht. Durch den Lichtbogen schmilzt der Schrott im Zentrum des Schachtes auf und es bildet sich eine Kaverne aus. Die hülsenförmige Schrottsäule stützt sich ringförmig im Bereich der Schachtachse auf dem Feuerfestmaterial des Schachtbodens ab, d. h. der Schrott steht in diesem Bereich in der Schmelze. Hierdurch wird aus physikalischen Gründen eine Überhitzung der Schmelze über die Schmelztemperatur hinaus verhindert und die Gefahr des Wiedererstarrens gesteigert.

Um die Nachteile der aufwendigen und teuren Einschmelzung mit elektrischer Energie zu verringern, wird in der WO 03/068995 A1 zur Stahlerzeugung auf Schrottbasis ein mit Primärverbrennung im Gegenstrom arbeitender Schachtofen vorgeschlagen, ein sogenannter Primärenergieschmelzer. In diesem Schachtofen erfolgt eine kontinuierliche Aufheizung des Schrottes bis auf Schmelztemperatur durch intensiven Wärmeaustausch mit den der Abwärtsbewegung des Schrottes entgegengesetzt aufsteigenden heißen Verbrennungsgasen aus der Verbrennung fossiler Brennstoffe. Die Verbrennungsgase kühlen sich hierbei ab und werden im oberen Teil des Schachtofens abgezogen. Die Zugabe der fossilen Brennstoffe erfolgt am unteren Ende eines mittig bis in den Bereich der Schmelze in den Schachtofen eingebrachten hohlen Innenschachtes.

Aus prozesstechnischen Gründen ist es zur Vermeidung von Oxidationsverlusten unerlässlich, dass die im unteren Teil des Schachtes ablaufenden Verbrennungsreaktionen unterstöchiometrisch ablaufen, weshalb weniger sauerstoffhaltiges Gas in diesem Bereich zugeführt wird, als zur vollständigen Verbrennung mindestens notwendig ist. Die aus der Schmelzzone aufsteigenden heißen Verbrennungsgase enthalten demnach noch brennbare Bestandteile, insbesondere CO, H₂ und CH₄. Zur vollständigen Nutzung der eingebrachten Brennstoffenergie für den Schmelzprozess bzw. die Aufheizung des Einsatzmaterials wird oberhalb der Schmelzzone eine Nachverbrennung dieser brennbaren Bestandteile durchgeführt, wozu zur Nachverbrennung zusätzliches sauerstoffhaltiges Gas durch Düsen in der Schachtwand von außen und durch Düsen des hohlen Innenschachtes von innen in verschiedenen Ebenen in die Schrottsäule eingebracht wird.

In gleicher Weise wie beim Elektro-Schachtofen weist dieser bekannte Primärenergieschmelzer den Nachteil eines von oben in den Schmelzschacht hineinragenden Innenschachtes auf, was zusätzliche Einrichtungen zur Positionierung und Fixierung erfordert. Sämtliche Anschlüsse und Zuführungen für Brennstoff, sauerstoffhaltiges Gas, Kühlwasser, MSR-Technik müssen dann flexibel ausgeführt sein, um eine Nachführung bei Positionsänderungen zu ermöglichen. Der Innenschacht muss zudem sehr stabil konstruiert sein, um den beim Schrottchargieren auftretenden mechanischen und thermischen Belastungen zu widerstehen. Auch das Weglassen eines derartigen Innenschachtes führt ohne angepasste Konstruktionsänderungen zu erheblichen Nachteilen.

Damit eine vollständige Nachverbrennung der Verbrennungsgase noch innerhalb des Schmelzschachtes erfolgen kann, muss eine intensive Durchmischung zwischen diesen Verbrennungsgasen und dem zugeführten Nachverbrennungsgas (sauerstoffhaltiges Gas) über den gesamten Schachtquerschnitt gewährleistet sein.

Beim Einbringen des sauerstoffhaltigen Gases ausschließlich durch ofenwandgestützte Düsen wird die Eindringtiefe der Gasstrahlen auf Grund der blockierenden Wirkung der unregelmäßigen und großflächigen Schüttungsstruktur der Schrottschüttung nachteilig begrenzt. Die angestrebte homogene Gasverteilung über den Schachtquerschnitt wird nur teilweise erreicht und das Auftreten von Gassträhnen ist wahrscheinlich. Es ist deshalb zu erwarten, dass die Gasstrahlen nicht tief genug in die Schrottschüttung eindringen können und nur im Nahbereich der Ofenwand eine Nachverbrennungsreaktion stattfinden wird und insbesondere im Bereich der Schachtachse ein Sauerstoffmangel vorherrscht. Daraus resultiert eine unvollständige Brennstoffausnutzung und eine Verschlechterung des Wirkungsgrades.

Ausgehend von diesem geschilderten Stand der Technik und den anstehenden Problemen ist es Aufgabe der Erfindung, einen gattungsgleichen direkt mit Primärenergie beheizten im Gegenstrom betriebenen Schachtofen, einen sogenannten Primärenergieschmelzer so zu verbessern, dass die geschilderten Nachteile der Konstruktion und der Nachverbrennung zumindest teilweise behoben werden.

Diese gestellte Aufgabe wird verfahrensmäßig mit den Merkmalen des Anspruchs 1 dadurch gelöst, dass die aus den Reststoffen gebildete Feststoffsäule im Bereich der Schachtachse durch eine Wölbung des feuerfesten Schachtbodens nach oben in Form eines Kegelstumpfes aus Feuerfestmaterial gestützt wird, und dass zusätzlich zu den in der Schachtwand vorhandenen Gas-Austrittsdüsen für sauerstoffhaltige Nachverbrennungsgase durch im Kegelstumpf angeordnete Gas-Austrittsdüsen eine gezielte Zuführung von sauerstoffhaltigen Nachverbrennungsgasen in die Feststoffsäule im Bereich der Schachtachse durchgeführt wird. Ein Schachtofen zur Durchführung dieses Verfahrens ist durch die Merkmale des Anspruchs 6 gekennzeichnet. Vorteilhafte Ausgestaltungen der Erfindung werden in den Unteransprüchen angegeben.

Durch die erfindungsgemäße Abstützung der Feststoffsäule im Bereich der Schachtachse durch einen Kegelstumpf aus Feuerfestmaterial sowie nach einer vorteilhaften Ausgestaltung der Erfindung auch an der Schachtwand durch eine ringförmig umlaufende aufgewölbte Feuerfestbank des Schachtbodens, wobei deren Höhe etwa der halben Höhe des Kegelstumpfes entspricht, wird somit ein großflächiger Kontakt der Schmelze mit noch nicht geschmolzenem, in die Schmelze hineinragenden Feststoff, und dadurch ein Wiedererstarren der Schmelze in diesem Bereich vermieden.

Die durch die spezielle Ausbildung des abstützenden Kegelstumpfes mit Nachverbrennungsgas-Austrittsdüsen ist es möglich, sauerstoffhaltige Nachverbrennungsgase axial und/oder radial und/oder tangential auch von unten im Bereich der Schachtachse in die Feststoffsäule einzudüsen. Weiterhin ist es durch die erfindungsgemäße Ausbildung des feuerfesten Schachtbodens möglich, eine wirksame Wasserkühlung innerhalb des Kegelstumpfes und/oder der Feuerfestbank zu integrieren, wodurch die Standzeit der die Feststoffsäule stützenden Schachtbodenbereiche deutlich erhöht wird.

Die für die Verbrennung des zugeführten Brennstoffes verwendeten Brenner sind erfindungsgemäß so installiert, dass zumindest ein Teil der im Bereich des Kegelstumpfes angeordneten Brenner zumindest teilweise mit einem tangentialen Anstellwinkel β ausgerichtet ist, wodurch eine rotierende Gasströmung der Verbrennungsgase im unteren Teil des Schmelzschachtes erzeugt und aufrechterhalten wird. Durch diese Maßnahme wird eine gleichmäßigere Aufheizung des unteren Teils der Feststoffsäule über ihren gesamten Querschnitt sowie eine gleichmäßigere Verteilung der erhaltenen Verbrennungsgase in der Feststoffsäule ohne Ausbildung von Gassträhnen erreicht. Nach einer vorteilhaften Ausgestaltung der Erfindung sind die Brenner in zwei axial von einander beabstandeten Brennerebenen angeordnet, wobei dann die Brenner einer Brennerebene jeweils gleich ausgerichtet sind.

Nach einer weiteren vorteilhaften Ausgestaltung der Erfindung sind die im Kegelstumpf angeordneten tangentialen Gas-Austrittsdüsen entgegengesetzt zu den tangentialen Brennern ausgerichtet, wodurch eine zusätzliche intensive Vermischung der Nachverbrennungsgase mit den Verbrennungsgasen erzielt wird.

Die Geometrie des Schachtbodens mit seinen an den Rändern und in seiner Mitte nach oben ausgebildeten Wölbungen, insbesondere die Geometrie des Kegelstumpfes in der Schachtbodenmitte (oberer und untere Kegeldurchmesser, Kegelwinkel α, Kegelstumpfhöhe und dessen Verhältnis zum unteren Kegeldurchmesser) ist generell frei wählbar, sinnvollerweise jedoch an den jeweiligen Schachtdurchmesser und an die Position der Brennerebenen angepasst.

Weitere Einzelheiten, Merkmale und Vorteile der Erfindung werden nachfolgend an in schematischen Zeichnungsfiguren dargestellten Ausführungsbeispielen näher erläutert.

Es zeigen:
- Fig. 1: eine Gesamtansicht einer Schrotteinschmelzanlage mit vertikal geschnittenem Schachtofen,
- Fig. 2: einen Vertikalschnitt durch den unteren Teil des Schmelzschachtes,
- Fig. 3: eine geschnittene Draufsicht auf eine Brennerebene mit radial angeordneten Brennern,
- Fig. 4: eine geschnittene Draufsicht auf eine Brennerebene mit tangential angeordneten Brennern.

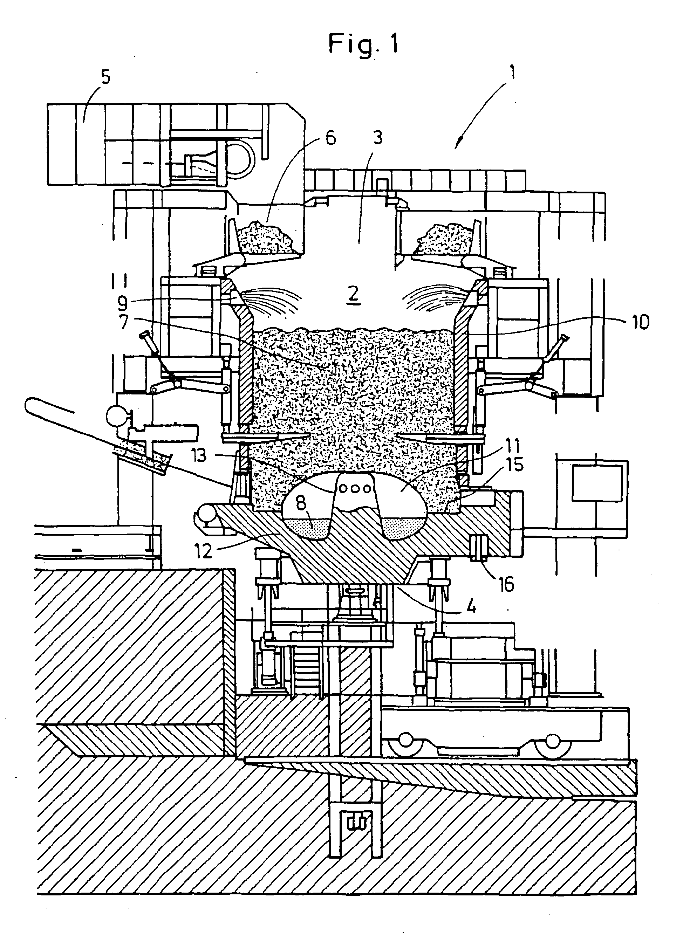

In Figur 1 ist eine Gesamtansicht einer kompletten Schrotteinschmelzanlage mit einem erfindungsgemäßen Schachtofen 1 in einem vertikalen Teilschnitt dargestellt. Der Schachtofen 1 ist mit seinem Schmelzschacht 2 in einem Gerüst angeordnet mit einer oberhalb des Schachtofens 1 angeordneten Schrottzuführung 5 und einer Schrottaufgabe 6. Im nicht mit Schrott gefüllten oberen Schachtende 3 ist zur Staubniederschlagung eine Wassereindüsung 9 installiert.

Der Schmelzschacht 2 ist mit Schrott in Form einer geschlossenen Feststoffsäule 7 gefüllt, die sich am unteren Schachtende 4 auf dem Schachtboden 12 abstützt, in der Schachtmitte auf dem erfindungsgemäßen Kegelstumpf 13 und seitlich auf der erfindungsgemäßen Feuerfestbank 15. Durch diese Abstützungen wird die Feststoffsäule 7 ringförmig abgeschmolzen bildet gemeinsam mit dem wannenartig ausgebildeten Schachtboden 12 eine ringförmige Kaverne 11 aus, in deren unterem Teil sich die nach unten aus der Feststoffsäule 7 abfließende Schmelze 8 sammelt. Der Abzug der Schmelze 8 wird dann über eine im Schachtboden 12 angeordnete Schmelzabstichöffnung 16 vorgenommen.

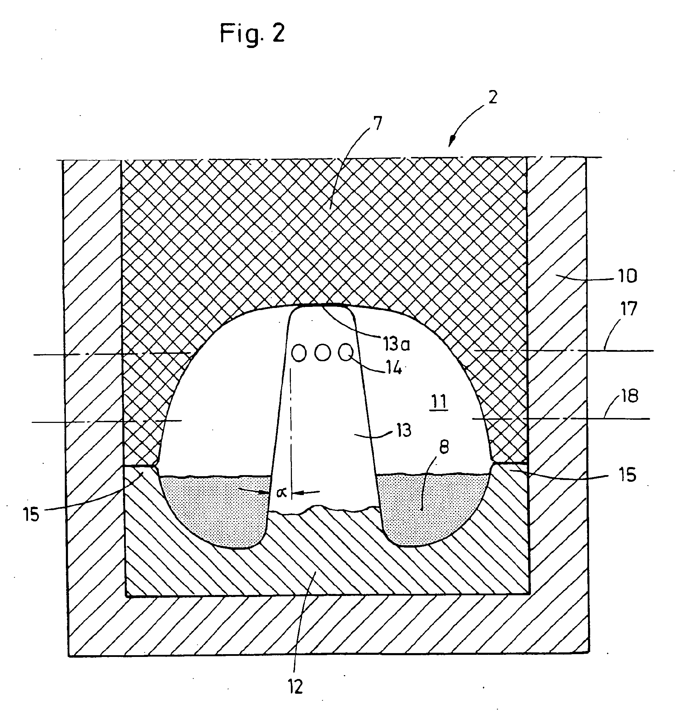

Die erfindungsgemäße Ausbildung des unteren Teils des Schmelzschachts 2 ist in der Figur 2 in einem gegenüber der Fig. 1 vergrößerten schematischen Vertikalschnitt dargestellt. Der aus der Schachtwand 10 und dem Schachtboden 12 gebildete Schmelzschacht 2 enthält eine über seinen Querschnitt vollständig aufgefüllte Feststoffsäule 7 aus Schrott, die sich im Bereich der Schachtachse sowie im Bereich der Schachtwand 10 auf dem erfindungsgemäß ausgebildeten Schachtboden 12 abstützt und gemeinsam mit dem Schachtboden 12 eine Kaverne 11 ausbildet.

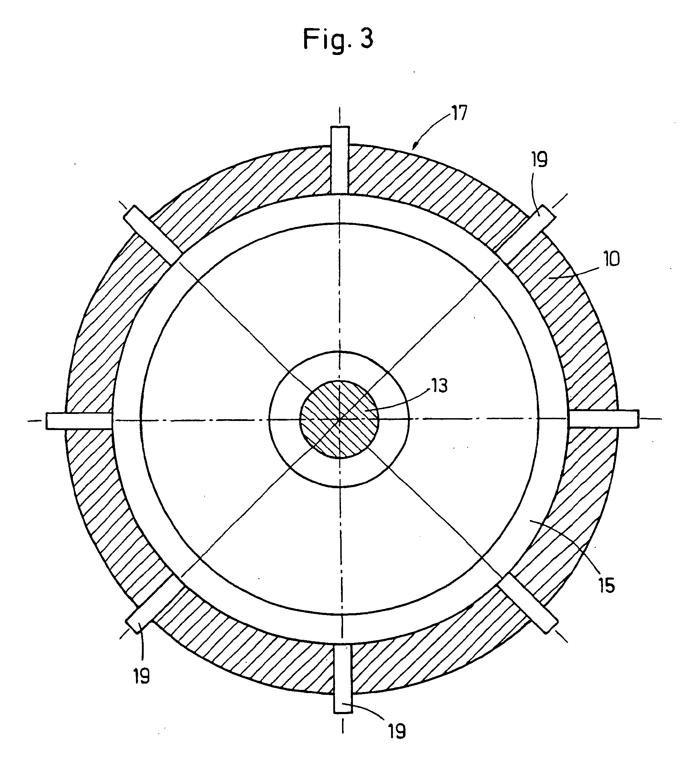

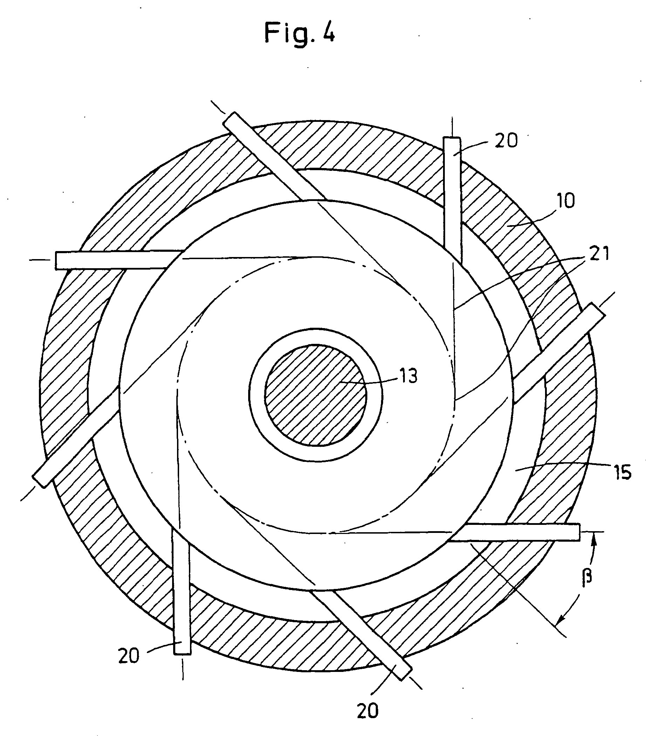

Im Bereich oberhalb der Feuerfestbank 15 sind in der Schachtwand 10 in zwei parallelen Ebenen 17, 18 mehrere Brenner 19, 20 (siehe Fig. 3 und 4) angeordnet, deren Wirkung in den kavernenartig entstanden Hohlraum der Feststoffsäule 7 hineinreichen. Dieser Bereich der Feststoffsäule 7 wird somit durch die Verbrennungsgase der Brenner 19, 20 aufgeheizt und aufgeschmolzen, die dann weiter nach oben durch die Feststoffsäule 7 aufsteigen. Um unvollständig verbrannte Bestandteile der Verbrennungsgase nachzuverbrennen, besitzt der Kegelstumpf 13, dessen geometrische Abmessungen einschließlich des Kegelwinkels α an die Geometrie des Schmelzschachtes 2 angepasst sind, in seinem oberen Teil in Höhe der oberen Brennerebene 17 Gas-Austrittsdüsen 14 für das Nachverbrennungsgas.

In Figur 3 ist die in der Fig. 2 gestrichelt angedeutete obere Brennerebene 17 in einer geschnittenen Draufsicht dargestellt. In dieser Brennerebene 17 sind gleichmäßig über dem Umfang der Schachtwand 10 verteilt mehrere - im dargestellten Ausführungsbeispiel acht - radial ausgerichtete Brenner 19 in der Schachtwand 10 angeordnet, aus deren Austrittöffnungen die austretenden Verbrennungsgase jeweils radial in Richtung zum Kegelstumpf 13 hin mit hoher Geschwindigkeit austreten.

In Figur 4 ist die in der Fig. 2 gestrichelt angedeutete untere Brennerebene 18 in einer geschnittenen Draufsicht dargestellt. In der Brennerebene 18 sind die in der Schachtwand 10 angeordneten acht Brenner 20 gegen die radiale Richtung um den Winkelbetrag β tangential angestellt. Die aus den Brennern 20 mit hoher Geschwindigkeit austretenden Verbrennungsgase treffen hierbei nicht auf einen zentralen Punkt auf wie bei der Brennerebene 17, sondern mit spitzem Winkel aufeinander, wodurch als Resultierende die gewünschte rotierende Gasströmung 21 entsteht.

Die Erfindung ist nicht auf die dargestellten Ausbildungen des Schachtbodens sowie der Brennerebenen und ihrer Zuordnung zueinander beschränkt, sondern diesbezüglich je nach der Geometrie des vorhandenen oder geplanten Schachtofens und hier insbesondere des Schmelzschachtes variabel durch den Fachmann abänderbar, wobei die Merkmale der Erfindung, Stützung der Feststoffsäule in der Schachtmitte und Intensivierung der Nachverbrennung innerhalb der Feststoffsäule zu erhalten sind.

### Bezugszeichenliste

- 1: Schachtofen
- 2: Schmelzschacht
- 3: oberes Schachtende
- 4: unteres Schachtende
- 5: Schrottzuführung
- 6: Schrottaufgabe
- 7: Feststoffsäule
- 8: Schmelze
- 9: Wassereindüsung
- 10: Schachtwand
- 11: Kaverne
- 12: Schachtboden
- 13: Kegelstumpf
- 13a: obere Begrenzung von 13
- 14: Gas-Austrittsdüsen in 13
- 15: Feuerfestbank
- 16: Schmelzabstichöffnung
- 17: obere Brennerebene
- 18: untere Brennerebene
- 19: radialer Brenner
- 20: tangentialer Brenner
- 21: rotierende Gasströmung
- α: Kegelwinkel
- β: tangentialer Anstellwinkel

## Patentansprüche

1. Verfahren zur kontinuierlichen thermischen Behandlung von Reststoffen wie beispielsweise Schrott durch Einschmelzen in einem im Gegenstrom betriebenen, durch Brenner (19, 20) mit Primärbrennstoffen direkt beheizten feuerfest ausgekleideten Schachtofen (1) für Hochtemperaturprozesse (Primärenergieschmelzer), wobei die am oberen Ende (3) des Schachtofens (1) zugeführten Reststoffe langsam nach unten sinken und dabei durch entgegengesetzt aufsteigende heiße Verbrennungsgase von im Schmelzschacht (2) stattfindenden Verbrennungsreaktionen stetig bis auf Schmelztemperatur aufgeheizt und am unteren Schachtende (4) als Schmelze (8) abgezogen werden,
**dadurch gekennzeichnet,**
**dass** die aus den Reststoffen gebildete Feststoffsäule (7) im Bereich der Schachtachse durch eine Wölbung des feuerfesten Schachtbodens (12) nach oben in Form eines Kegelstumpfes (13) aus Feuerfestmaterial gestützt wird, und dass zusätzlich zu den in der Schachtwand vorhandenen Gas-Austrittsdüsen für sauerstoffhaltige Nachverbrennungsgase durch im Kegelstumpf (13) angeordnete Gas-Austrittsdüsen (14) eine gezielte Zuführung von sauerstoffhaltigen Nachverbrennungsgase in die Feststoffsäule (7) im Bereich der Schachtachse durchgeführt wird.

2. Verfahren nach Anspruch 1,
**dadurch gekennzeichnet,**
**dass** im unteren Bereich der Schachtwand (10) die Feststoffsäule (7) zusätzlich vorzugsweise durch eine ringförmig umlaufende aufgewölbte Feuerfestbank (15) des Schachtbodens (12) abgestützt wird.

3. Verfahren nach Anspruch 1 oder 2,
**dadurch gekennzeichnet,**
**dass** die Zuführung der sauerstoffhaltigen Nachverbrennungsgase aus den Gas-Austrittsdüsen (14) des Kegelstumpfes (13) axial und/oder radial und/oder tangential von unten in die Feststoffsäule (7) erfolgt.

4. Verfahren nach Anspruch 3,
**dadurch gekennzeichnet,**
**dass** durch tangentiale Anstellung zumindest eines Teils der im Bereich des Kegelstumpfes (13) angeordneten Brenner (19, 20) eine rotierende Gasströmung (21) der Verbrennungsgase im unteren Teil des Schmelzschachtes (2) aufrechterhalten wird.

5. Verfahren nach Anspruch 4,
**dadurch gekennzeichnet,**
**dass** die aus den tangentialen Gas-Austrittsdüsen (14) austretenden Nachverbrennungsgase tangential entgegengesetzt zur rotierenden Gasströmung (21) geführt werden.

6. Schachtofen (1) zur kontinuierlichen thermischen Behandlung von Reststoffen wie beispielsweise Schrott durch Einschmelzen, der im Gegenstrom betrieben und durch Brenner (19, 20) mit Primärbrennstoffen direkt beheizt und feuerfest ausgekleidet ist, zur Durchführung des Verfahrens nach einem oder mehreren der Ansprüche 1 bis 5,
**dadurch gekennzeichnet,**
**dass** der feuerfeste Schachtboden (12) in der Schachtachse in Form eines Kegelstumpfes (13) nach oben gewölbt ist und im oberen Teil des Kegelstumpfes (13) axiale und/oder radiale und/oder tangentiale Gas-Austrittsdüsen (14) für sauerstoffhaltige Gase angeordnet sind.

7. Schachtofen (1) nach Anspruch 6,
**dadurch gekennzeichnet,**
**dass** der Schachtboden (12) in Richtung zur Schachtwand (10) gleichfalls hochgewölbt ist und an der Schachtwand (10) eine ringförmig umlaufende aufgewölbte Feuerfestbank (15) ausbildet.

8. Schachtofen (1) nach Anspruch 7,
**dadurch gekennzeichnet,**
**dass** die Höhe der aufgewölbten Feuerfestbank (15) etwa der halben Höhe des Kegelstumpfes (13) entspricht.

9. Schachtofen (1) nach Anspruch 6, 7 oder 8,
**dadurch gekennzeichnet,**
**dass** unterhalb der oberen Begrenzung (13a) des Kegelstumpfes (13) in der feuerfesten Schachtwand (10) mehrere Brenner (19, 20) angeordnet und zumindest teilweise mit einem tangentialen Anstellwinkel (β) ausgerichtet sind.

10. Schachtofen (1) nach Anspruch 9,
**dadurch gekennzeichnet,**
**dass** die Brenner (19, 20) in zwei axial von einander beabstandeten Brennerebenen (17, 18) angeordnet sind.

11. Schachtofen (1) nach Anspruch 10,
**dadurch gekennzeichnet,**
**dass** die Brenner (19, 20) einer Brennerebene (17, 18) jeweils gleich ausgerichtet sind.

12. Schachtofen (1) nach Anspruch 10 oder 11,
**dadurch gekennzeichnet,**
**dass** die tangentialen Gas-Austrittsdüsen (14) zu den tangentialen Brennern (20) mit entgegengesetztem tangentialen Winkel angeordnet sind.

13. Schachtofen (1) nach einem oder mehreren der Ansprüche 6 bis 12,
**dadurch gekennzeichnet,**
**dass** die Geometrie des Schachtbodens (12) mit seinen an den Rändern und in seiner Mitte nach oben ausgebildeten Wölbungen, insbesondere die Geometrie des Kegelstumpfes (13) in der Schachtbodenmitte (oberer und untere Kegeldurchmesser, Kegelwinkel (α), Kegelstumpfhöhe und dessen Verhältnis zum unteren Kegeldurchmesser, frei wählbar an den jeweiligen Schachtdurchmesser und an die Position der Brennerebenen (17, 18) angepasst ist.

14. Schachtofen (1) nach einem oder mehreren der Ansprüche 6 bis 13,
**dadurch gekennzeichnet,**
**dass** innerhalb des feuerfesten Schachtboden (12) und hier insbesondere in dem die Feststoffsäule stützenden Kegelstumpf (13) und/oder in der Feuerfestbank (15) eine Wasserkühlung integriert ist.

## Claims

1. Method for continuous thermal treatment of recyclable materials such as, for example, scrap, by melting in a shaft furnace (1), which is operated in counterflow and directly heated by burners (19, 20) with primary fuels and which has a refractory lining, for high temperature processes (primary energy smelter), wherein the recyclable materials fed at the upper end (3) of the shaft furnace (1) sink down slowly and in that case are constantly heated up to melt temperature by hot combustion gases rising up in opposite direction from combustion reactions taking place in the melting shaft (2) and are extracted at the lower shaft end (4) as melt (8), **characterised in that** the solid material column (7) formed from the recyclable materials is supported in the region of the shaft axis by an arching of the refractory shaft base (12) upwardly in the form of a cone frustum (13) of refractory material and that in addition to the gas outlet nozzles, which are present in the shaft wall, for afterburning gases, which contain oxygen, a selective feed of afterburning gases, which contain oxygen, into the solid material column (7) is carried out in the region of the shaft axis by gas outlet nozzles (14) arranged in the cone frustum (13).

2. Method according to claim 1, **characterised in that** in the lower region of the shaft wall (10) the solid material column (7) is in addition preferably supported by an annularly circling upwardly arched refractory material partition wall (15) of the shaft base (12).

3. Method according to claim 1 or 2, **characterised in that** the feed of the afterburning gases containing oxygen from the gas outlet nozzles (14) of the cone frustum (13) takes place axially and/or radially and/or tangentially from below into the solid material column (7).

4. Method according to claim 3, **characterised in that** through tangential adjustment of at least a part of the burners (19, 20) arranged in the region of the cone frustum (13) a rotating gas flow (21) of the combustion gases in the lower part of the melting shaft (2) is maintained.

5. Method according to claim 4, **characterised in that** the afterburning gases issuing from the tangential gas outlet nozzles (14) are led tangentially in opposite direction to the rotating gas flow (21).

6. Shaft furnace (1) for continuous thermal treatment of recyclable materials such as, for example, scrap, by melting, which furnace is operated in counterflow, directly heated by burners (19, 20) with primary fuels and provided with a refractory lining, for carrying out the method according to one or more of claims 1 to 5, **characterised in that** the refractory shaft base (12) is arched upwardly in the shaft axis in the form of a cone frustum (13) and axial and/or radial and/or tangential gas outlet nozzles (14) for gases containing oxygen are arranged in the upper part of the cone frustum (13).

7. Shaft furnace (1) according to claim 6, **characterised in that** the shaft base (12) is similarly curved upwardly in direction towards the shaft wall (10) and an annularly encircling upwardly arched refractory partition wall (15) is formed at the shaft wall (10).

8. Shaft furnace (1) according to claim 7, **characterised in that** the height of the upwardly arched refractory partition wall (15) approximately corresponds with half the height of the cone frustum (13).

9. Shaft furnace (1) according to claim 6, 7 or 8, **characterised in that** several burners (19, 20) are arranged below the upper boundary (13a) of the cone frustum (13) in the refractory shaft wall (10) and are oriented at least partly with a tangential angle of incidence (β).

10. Shaft furnace (1) according to claim 9, **characterised in that** the burners (19, 20) are arranged in two burner planes (17, 18) axially spaced from one another.

11. Shaft furnace (1) according to claim 10, **characterised in that** the burners (19, 20) of a burner plane (17, 18) are respectively of the same orientation.

12. Shaft furnace (1) according to claim 10 or 11, **characterised in that** the tangential gas outlet nozzles (14) are arranged with opposite tangential angle with respect to the tangential burners (20).

13. Shaft furnace (1) according to one or more of claims 6 to 12, **characterised in that** the geometry of the shaft base (12) is freely selectably adapted to the respective shaft diameter and to the position of the burner plates (17, 18) by its curvatures formed upwardly at the edges and in its middle, particularly the geometry of the cone frustum (13) in the shaft base centre (upper and lower cone diameter, cone angle (α), cone frustum height and the ratio thereof to the lower cone diameter).

14. Shaft furnace (1) according to one or more of claims 6 to 13, **characterised in that** a water cooling is integrated within the refractory shaft base (12) and here particularly in the cone frustum (13), which supports the solid material column, and/or in the refractory partition wall (15).

## Revendications

1. Procédé de traitement thermique continu de résidus, comme par exemple des mitrailles, par fusion dans un four à cuve (1) à revêtement ignifugé fonctionnant à contre-courant et chauffé directement par des brûleurs (19, 20) au moyen de combustibles primaires pour des processus à haute température (fondeurs à énergie primaire), les déchets acheminés à l'extrémité supérieure (3) du four à cuve (1) descendant lentement vers le bas et étant ainsi chauffés constamment par des gaz de combustion chauds montant en sens opposé par des réactions de combustion ayant lieu dans la cuve de fusion (2) jusqu'à température de fusion et extraits à l'extrémité inférieure de la cuve (4) sous forme de coulée (8),
**caractérisé en ce que**
la colonne de matière solide (7) composée des déchets est soutenue vers le haut au niveau de l'axe de la cuve par un bombement du fond ignifugé de la cuve (12) se présentant sous forme d'un tronc conique (13) en matériau ignifugé et qu'en plus des buses de sortie de gaz (14) placées dans la paroi de la cuve pour les gaz de post-combustion contenant de l'oxygène, un acheminement ciblé de gaz de post-combustion contenant de l'oxygène vers la colonne de matière solide (7) est réalisé au niveau de l'axe de la cuve.

2. Procédé selon la revendication 1,
**caractérisé en ce que**,
au niveau inférieur de la paroi de la cuve (10), la colonne de matière solide (7) est de plus soutenue de préférence par un banc ignifugé (15) bombé périphérique et de forme annulaire du fond de la cuve (12).

3. Procédé selon la revendication 1 ou 2,
**caractérisé en ce que**
l'acheminement des gaz de post-combustion contenant de l'oxygène sortant des buses de sortie de gaz (14) du tronc conique (13) a lieu axialement et/ou radialement et/ou tangentiellement depuis le bas vers la colonne de matière solide (7)

4. Procédé selon la revendication 3,
**caractérisé en ce que**,
par approche tangentielle d'au moins une partie du brûleur (19, 20) disposé au niveau du tronc conique (13), on maintient un écoulement de gaz en rotation (21) des gaz de combustion dans la partie inférieure de la cuve de fusion (2).

5. Procédé selon la revendication 4,
**caractérisé en ce que**
les gaz de post-combustion sortant des buses de sortie tangentielles de gaz (14) sont guidés tangentiellement à l'opposé de l'écoulement de gaz en rotation (21).

6. Four à cuve (1) pour le traitement thermique continu de résidus, comme par exemple des mitrailles par fusion, qui fonctionne à contre-courant et qui est chauffé directement par des brûleurs (19, 20) au moyen de combustibles primaires et comporte un revêtement ignifugé, pour la réalisation du procédé selon une ou plusieurs des revendications 1 à 5,
**caractérisé en ce que**
le fond de cuve ignifugé (12) est bombé vers le haut dans l'axe de la cuve sous la forme d'un tronc conique (13) et que, dans la partie supérieure du tronc conique (13), des buses de sortie de gaz axiales et/ou radiales et/ou tangentielles (14) pour des gaz contenant de l'oxygène sont disposées.

7. Four à cuve (1) selon la revendication 6,
**caractérisé en ce que**
le fond de la cuve (12) est également bombé vers le haut en direction de la paroi de la cuve (10) et constitue sur la paroi de la cuve (10) un banc ignifugé bombé périphérique de forme annulaire (15).

8. Four à cuve (1) selon la revendication 7,
**caractérisé en ce que**
la hauteur du banc ignifugé bombé (15) équivaut approximativement à la moitié de la hauteur du tronc conique (13).

9. Four à cuve (1) selon la revendication 6, 7 ou 8,
**caractérisé en ce que**,
en dessous de la limite supérieure (13a) du tronc conique (13), dans la paroi ignifugée de la cuve (10), plusieurs brûleurs (19, 20) sont disposés et orientés du moins partiellement suivant un angle d'approche tangentiel (β).

10. Four à cuve (1) selon la revendication 9,
**caractérisé en ce que**
les brûleurs (19, 20) sont disposés dans deux plans de brûleurs (17, 18) espacés mutuellement dans le sens axial.

11. Four à cuve (1) selon la revendication 10,
**caractérisé en ce que**
les brûleurs (19, 20) d'un plan de brûleurs (17, 18) ont respectivement la même orientation.

12. Four à cuve (1) selon la revendication 10 ou 11,
**caractérisé en ce que**
les buses tangentielles de sortie de gaz (14) sont disposées suivant un angle tangentiel opposé par rapport aux brûleurs tangentiels (20).

13. Four à cuve (1) selon une ou plusieurs des revendications 6 à 12,
**caractérisé en ce que**
la géométrie du fond de cuve (12) est adaptée par ses bombements réalisés vers le haut sur ses bords et en son centre, notamment la géométrie du tronc conique (13) au centre du fond de la cuve (diamètre supérieur et inférieur du cône, angle de cône (α), hauteur du tronc conique et relation de celui-ci avec le diamètre inférieur du cône) et avec une possibilité de choix libre au diamètre respectif de la cuve et à la position des plans de brûleurs (17, 18).

14. Four à cuve (1) selon une ou plusieurs des revendications 6 à 13,
**caractérisé en ce que**,
à l'intérieur du fond de cuve ignifugé (12) et ici notamment dans le tronc conique (13) soutenant la colonne de matière solide (13) et/ou dans le banc ignifugé (15) est intégré un refroidissement à eau.
